# EUROPEAN PATENT SPECIFICATION

(11) **EP 3 676 760 B1**
(45) Date of publication and mention of the grant of the patent: **12.11.2025**
(21) Application number: 18883211.7
(22) Date of filing: 03.04.2018
(51) Int. Cl.: G06F 21/31, G06V 20/62, G06V 30/148

(54) **COMPUTING APPARATUS AND INFORMATION INPUT METHOD OF THE COMPUTING APPARATUS**
RECHENVORRICHTUNG UND INFORMATIONSEINGABEVERFAHREN DER RECHENVORRICHTUNG
APPAREIL INFORMATIQUE ET PROCÉDÉ D'ENTRÉE D'INFORMATIONS DE L'APPAREIL INFORMATIQUE

(30) Priority: 30.11.2017 KR 20170163447
(43) Date of publication of application: 08.07.2020
(73) Proprietor: Samsung Electronics Co., Ltd., Suwon-si, Gyeonggi-do 16677 (KR)
(72) Inventor: HAN, Jun Kyu, Suwon-si, Gyeonggi-do 16677 (KR)
(74) Representative: HGF
(86) International application number: PCT/KR2018/003912
(87) International publication number: WO 2019/107674

(56) References cited:
- WO-A1-98/43181
- US-A1- 2004 205 530
- US-A1- 2005 198 563
- US-A1- 2005 246 661
- US-A1- 2008 267 505
- US-A1- 2012 011 084
- US-A1- 2013 117 044
- US-A1- 2017 161 243

## Description

### [Technical Field]

The present disclosure relates to a computing apparatus, an information input method of the computing apparatus and a user interface for inputting information, and more particularly, to a method and apparatus for classifying and storing input information using machine learning and automatically inputting the stored information.

### [Background Art]

An artificial Intelligence (AI) system is a computer system that implements human-level intelligence. Unlike a conventional rule-based smart system, the AI system is a system that learns and judges by itself and becomes smart. As the AI system is used more, it has a higher recognition rate and understands a user's taste more accurately. Therefore, conventional rule-based smart systems are gradually being replaced by deep learning-based AI systems.

AI technology consists of machine learning (deep learning) and element technologies utilizing machine learning.

The machine learning is an algorithm technology that classifies/learns characteristics of input data by itself. The element technologies are technologies that simulate functions (such as recognition and judgment) of human brain using a machine learning algorithm such as deep learning. The elemental technologies are applicable in technical fields such as linguistic understanding, visual understanding, reasoning/prediction, knowledge representation, and motion control.

Various fields in which AI technology is applied are as follows. Linguistic understanding is a technology for recognizing and applying/ processing human language/characters and includes natural language processing, machine translation, dialogue system, questions and answers, and voice recognition/synthesis. Visual understanding is a technology for recognizing and processing an object just as human vision does and includes object recognition, object tracking, image search, human recognition, scene understanding, spatial understanding, and image enhancement. Reasoning/prediction is a technology for logically inferring and predicting by judging information and includes knowledge/probability-based reasoning, optimization prediction, preference-based planning, and recommendation. Knowledge representation is a technology for automating human experience information into knowledge data and includes knowledge building (data generation/classification) and knowledge management (data utilization). Motion control is a technology for controlling the autonomous driving of a vehicle and the motion of a robot and includes motion control (navigation, collision, driving) and operation control (behavior control).

In addition, various Internet services are being developed and provided to users. To use various Internet services, users are often required to input information to a computing apparatus. For example, users go through a membership subscription procedure or a user authentication procedure in order to utilize various Internet services. That is, a user has to repeatedly input information similar to the information that the user has previously input. Therefore, there is a need for a method and apparatus that can make it easier to input information to a computing apparatus using AI technology.

US 2013/117044 A1 relates to a system and method for electronically verifying a patient's medication inventory.

### [Disclosure]

### [Technical Problem]

Aspects of the present disclosure provide a method and apparatus for classifying and storing input information using machine learning.

Aspects of the present disclosure also provide a method and apparatus for automatically inputting information by determining information suitable for an input item using machine learning.

However, aspects of the present disclosure are not restricted to the one set forth herein. The above and other aspects of the present disclosure will become more apparent to one of ordinary skill in the art to which the present disclosure pertains by referencing the detailed description of the present disclosure given below.

### [Technical Solution]

According to an aspect of the disclosure, there is provided an electronic device comprising: a memory; a display; an input device; and one processor configured to: display a screen of a first application on the display; obtain input information from the screen of the first application, wherein the input information is input, via the input device, on the screen of the first application by a user; obtain output data by inputting the obtained input information which is in the form of a text to a text classification model generated using a machine learning model, wherein the output data is used as a basis for at least one data set, the at least one data set including at least one field name and the input information as a value corresponding to the at least one field name; display the obtained input information on a user interface configured to receive a request to modify the displayed input information; in response to a user modification request, modify the input information; store the at least one data set having at least one field name and the modified input information as a value corresponding to the at least one field name; display a screen of a second application on the display; obtain a text of the screen of the second application; determine, based on the text of the second application, if the at least one field name included in the at least one data set is included in the screen of the second application; and if the at least one field name included in the at least one data set is included in the screen of the second application, input the stored modified input information included in the at least one data set into an input item of the screen, of the second application.

The second application may be an application for creating a spreadsheet document.

The input information may be obtained, for output, from the screen of the first application using a combination of an optical character recognition, OCR, and the machine learning model.

According to another aspect of the disclosure, there is provided a method of controlling an electronic device, the method comprising: displaying a screen of a first application on a display of the electronic device; obtaining input information from the screen of the first application, wherein the input information is input, via an input device of the electronic device, on the screen of the first application by a user; obtaining output data by inputting the obtained input information which is in the form of a text to a text classification model generated using a machine learning model, wherein the output data is used as a basis for at least one data set, the at least one data set including at least one field name and the input information as a value corresponding to the at least one field name; displaying the obtained input information on a user interface configured to receive a request to modify the displayed input information; in response to a user modification request, modifying the input information; storing the at least one data set having at least one field name and the modified input information as a value corresponding to the at least one field name; displaying a screen of a second application on the display; obtaining a text of the screen of the second application; determining, based on the text of the second application, if the at least one field name included in the at least one data set is included in the screen of the second application; and if the at least one field name included in the at least one data set is included in the screen of the second application, inputting the stored modified input information included in the at least one data set into an input item of the screen, of the second application.

The second application may be an application for creating a spreadsheet document.

The input information may be obtained, for output, from the screen of the first application using a combination of an optical character recognition, OCR, and the machine learning model.

According to a further aspect of the disclosure, there is provided a non-transitory computer-readable recording medium having recorded thereon instructions executable by one processor to perform operations comprising: displaying a screen of a first application on a display; obtaining input information from the screen of the first application, wherein the input information is input, via an input device, on the screen of the first application by a user; obtaining output data by inputting the obtained input information which is in the form of a text to a text classification model generated using a machine learning model, wherein the output data is used as a basis for at least one data set, the at least one data set including at least one field name and the input information as a value corresponding to the at least one field name; displaying the obtained input information on a user interface configured to receive a request to modify the displayed input information; in response to a user modification request, modifying the input information; storing the at least one data set having at least one field name and the modified input information as a value corresponding to the at least one field name; displaying a screen of a second application on the display; obtaining a text of the screen of the second application; determining, based on the text of the second application, if the at least one field name included in the at least one data set is included in the screen of the second application; and if the at least one field name included in the at least one data set is included in the screen of the second application, inputting the stored modified input information included in the at least one data set into an input item of the screen, of the second application.

The second application may be an application for creating a spreadsheet document.

The input information may be obtained, for output, from the screen of the first application using a combination of an optical character recognition, OCR, and the machine learning model.

### [Description of Drawings]

These and/or other aspects will become apparent and more readily appreciated from the following description of the exemplary embodiments, taken in conjunction with the accompanying drawings in which:
FIG. 1 illustrates the configuration of a system for performing an information input method according to an exemplary embodiment;
FIG. 2 illustrates a process of classifying and storing input information according to an exemplary embodiment;
FIG. 3 illustrates how a computing apparatus extracts a text from a screen according to an exemplary embodiment;
FIG. 4 illustrates how a computing apparatus displays a classified text according to an exemplary embodiment;
FIG. 5 illustrates how a computing apparatus extracts a text from a screen according to another exemplary embodiment;
FIG. 6 illustrates a process in which a computing apparatus extracts a text using one or more of screen capture and source code according to another exemplary embodiment;
FIG. 7 illustrates a process in which a computing apparatus provides a user interface for classifying and storing input information according to an exemplary embodiment;
FIG. 8 illustrates a process of registering authentication information for input information according to an exemplary embodiment;
FIG. 9 illustrates a user interface for receiving authentication information according to an exemplary embodiment;
FIG. 10 illustrates a process of storing a data set based on user feedback on obtained input information according to an exemplary embodiment;
FIG. 11 illustrates a user interface for receiving user feedback on obtained input information according to an exemplary embodiment;
FIG. 12 illustrates a process of automatically inputting information to input items of a user interface according to an exemplary embodiment;
FIG. 13 is a diagram for explaining the concept of how a computing apparatus recognizes input items of a user interface according to an exemplary embodiment;
FIG. 14 illustrates a case where a computing apparatus inputs information by selecting a representative field name according to an exemplary embodiment;
FIG. 15 illustrates a case where information input to one of input items is changed according to an exemplary embodiment;
FIG. 16 illustrates a case where information is input using a floating icon according to an exemplary embodiment;
FIG. 17 illustrates a case where information is input using a floating icon according to another exemplary embodiment;
FIG. 18 illustrates the configuration of a computing apparatus according to an exemplary embodiment;
FIG. 19 illustrates, by function, the configuration of an input information processing operation according to an exemplary embodiment;
FIG. 20 illustrates a process in which the computing apparatus of FIG. 18 creates a data set;
FIG. 21 illustrates a process in which the computing apparatus of FIG. 18 identifies field names, which correspond to input items, in a user interface having the input items and input values to the input items;
FIG. 22 illustrates the configuration of a data set according to an exemplary embodiment;
FIGS. 23 through 26 illustrate a case where information is input according to another exemplary embodiment; and
FIG. 27 illustrates a case where information is input according to another exemplary embodiment.

### [Mode for Invention]

Hereinafter, exemplary exemplary embodiments of the present disclosure will be described in detail with reference to the attached drawings. Advantages and features of the present disclosure and methods of accomplishing the same may be understood more readily by reference to the following detailed description of exemplary exemplary embodiments and the accompanying drawings. The present disclosure may, however, be embodied in many different forms and should not be construed as being limited to the exemplary embodiments set forth herein. Rather, these exemplary embodiments are provided so that this disclosure will be thorough and complete and will fully convey the concept of the present disclosure to those skilled in the art, and the present disclosure will only be defined by the appended claims. Like reference numerals refer to like elements throughout the specification.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein. The terminology used herein is for the purpose of describing particular exemplary embodiments only and is not intended to be limiting of the present disclosure. As used herein, the singular forms "a", "an" and "the" are intended to include the plural forms as well, unless the context clearly indicates otherwise.

Although the present disclosure is described herein based on text as a representative example of input information, it can be applied to other input information by applying the same technical means. For example, the present disclosure can be applied even when the input information is an image.

Exemplary embodiments of the present disclosure will hereinafter be described with reference to the drawings.

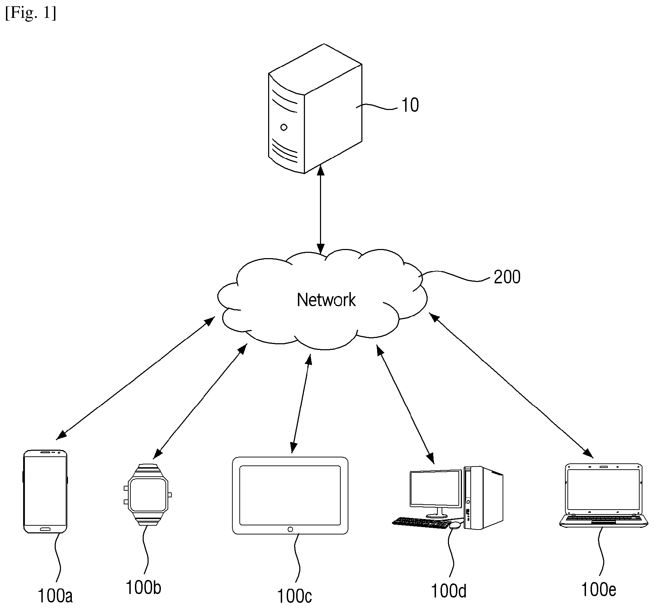

FIG. 1 illustrates the configuration of a system for performing an information input method according to an exemplary embodiment. The system according to the current exemplary embodiment may include a text classification model training apparatus 10 and one or more computing apparatuses 100a through 100e. The computing apparatuses 100a through 100e may be user terminals used by users. For example, the computing apparatuses 100a through 100e may be wearable devices such as smartphones and smart watches or computing devices such as tablets, desktops and notebooks. The computing apparatuses 100a through 100e may also be server devices that provide services to user terminals.

The text classification model training apparatus 10 performs machine learning training using training data. The text classification model training apparatus 10 according to an exemplary embodiment may perform machine learning training using an artificial neural network. That is, the text classification model training apparatus 10 may generate, but not necessarily, a classification model that can determine to which category input information (e.g., text) belongs. Here, the training data may be an example of information input by a user or an example of annotations and identifiers used in source code. Here, the input information refers to information input by a user to a computing apparatus. For example, the input information may include personal information input by a user to a computing apparatus, such as name, gender, age, and date of birth. In addition, the source code refers to a set of codes for configuring a user interface. For example, the source code may include html source code. According to an example, the text classification model training apparatus 10 may obtain the training data by collecting the input information or the source code.

In FIG. 1, the text classification model training apparatus 10 is illustrated as a separate element from the computing apparatuses 100a through 100e. However, according to another exemplary embodiment, the text classification model training apparatus 10 may be included in the computing apparatuses 100a through 100e. That is, the computing apparatuses 100a through 100e may be configured to perform machine learning by themselves.

Machine learning training may be performed to generate a model that determines whether a field name or input information exists in a text or to generate a model that not only determines whether a field name or input information exists in a text but also classifies the field name or the input information. Machine learning training may use various types of algorithms that can generate a classification model, such as -gram, artificial neural network, naive bayes, and support vector machine (SVM). In an exemplary embodiment, the above types of encryption algorithms are divided into a plurality of different encryption algorithms, such as sha-256, aes-128-cbc and hmac-128, specified in the Internet Engineering Task Force (IETF) and International Organization for Standardization (ISO) standards.

The text classification model training apparatus 10 may selectively extract feature data from input information depending on exemplary embodiments and perform machine learning training using the extracted feature data.

According to an example, the text classification model training apparatus 10 may parse source code and generate feature data related to the distribution of a pre-designated keyword that characterizes the nature of an identifier. The keyword may be contained in an annotation or a variable name included in the source code.

The text classification model training apparatus 10 may transmit a text classification model generated as a result of machine learning training to the computing apparatuses 100a through 100e via a network 200. The text classification model may include a ML parameter set that defines the model. The text classification model training apparatus 10 may update the text classification model using the training data updated periodically or non-periodically and transmit the updated text classification model to the computing apparatuses 100a through 100e.

The computing apparatuses 100a through 100e may receive and store the text classification model and store input information according to predefined settings or user settings or input the stored input information to an input item.

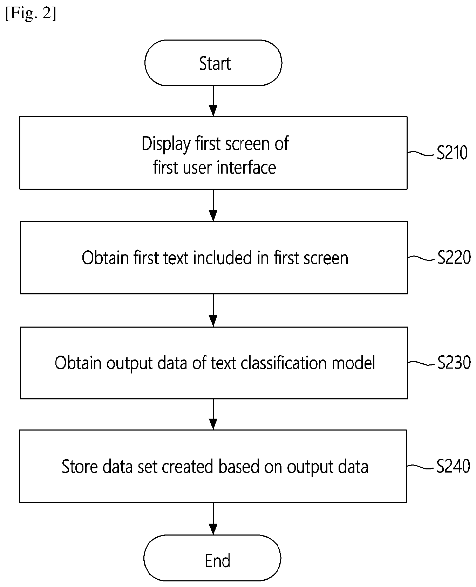

FIG. 2 illustrates a process of classifying and storing input information according to an exemplary embodiment. The process illustrated in FIG. 2 is a process of obtaining a text from a first screen of a first user interface to which input information has been input and classifying and storing the input information based on the obtained text by using a text classification model.

First, a computing apparatus is configured to display a first screen of a first user interface in operation S210. Here, the first user interface may cause the computing apparatus to display a screen for receiving information from a user. That is, the computing apparatus is arranged to receive input information through the first user interface. For example, the first user interface is arranged to be an execution screen or a web page of an application which is displayed on a display. The application may be software running at a user level.

Next, the computing apparatus is arranged to obtain a first text from the first screen in operation S220. Here, the first screen is a screen displayed on the display of the computing apparatus. In addition, the first screen is a screen displaying input information input by a user. Here, the input information is displayed in the form of text. Although an exemplary embodiment in which the input information is in the form of text is described herein, the input information can be in a form other than the text form. According to an exemplary embodiment, the computing apparatus may obtain an image of the first screen by capturing the first screen in operation S220. The computing apparatus may extract the first text included in the first screen by performing image recognition on the obtained image of the first screen. Here, the first text refers to a text determined to be the input information input to the first user interface. For example, the computing apparatus may extract a text included in the first screen by applying an optical character recognition (OCR) program to the image of the first screen.

Next, the computing apparatus is configured to obtain output data by inputting the obtained first text to a text classification model in operation S230. Here, if the input information input by the user is detected in the first text, the text classification model may output at least one of the input information in the input first text and categories of the input information. The text classification model is a model generated based on training data about to which category a text input by a user belongs and can determine a category to which a text is highly likely to belong. Depending on exemplary embodiments, the computing apparatus can obtain a text and input information using methods other than the above method. For example, the computing apparatus may obtain input information by obtaining source code that configures the first user interface and identifying annotations and identifiers contained in the source code to obtain information allocated to the identifiers. In this case, the text classification model may determine which category of information is allocated to an identifier by learning various source codes and thus determine that input information allocated to the identifier belongs to the determined category.

The computing apparatus creates a data set based on the output data of the text classification model. The data set is data having input information as values of fields corresponding to categories of the input information. In addition, each field of the data set has a field name. According to an exemplary embodiment, one data set may be created for each user. For example, data in which texts "Kildong Hong," "18082017," "0108765421" and "Sungchon-gil Umyeon-dong, Seoul" input by one user are values of fields having field names "name," "date of birth," "mobile phone number" and "address" may form one data set. The computing apparatus may store the data set created based on the output data. Here, the computing apparatus may store the data set using a storage that is included in the computing apparatus but may also store the data set in a storage (such as cloud storage) that is physically separated from the computing apparatus.

According to an exemplary embodiment, the computing apparatus may monitor the first user interface by periodically repeating operations S220 and S230. While the computing apparatus is monitoring the first user interface, if the first text classified as a text to be stored is included in the first screen displaying the first user interface, the computing apparatus determines to store output data (e.g., the first text), which is obtained by performing operation S230, in operation S240. That is, by monitoring the displayed screen using a model generated through machine learning, the computing apparatus may determine whether to automatically store information when the information (e.g., the first text) to be stored is included in the first screen. Therefore, the computing apparatus recognizes and stores information to be stored by using artificial intelligence. According to an exemplary embodiment, the computing apparatus outputs information (e.g., the first text) to be stored through a display device, a communication interface, or the like.

According to another exemplary embodiment, operations S220 through S240 may be performed when a storage command is input to the computing apparatus. That is, when the user inputs a storage command for storing information displayed on the screen to the computing apparatus, the computing apparatus may store the information displayed on the screen. The method of receiving the storage command from the user may vary depending on exemplary embodiments. For example, a floating icon may be selected, or a voice input corresponding to the storage command may be used so as to input the storage command to the computing apparatus.

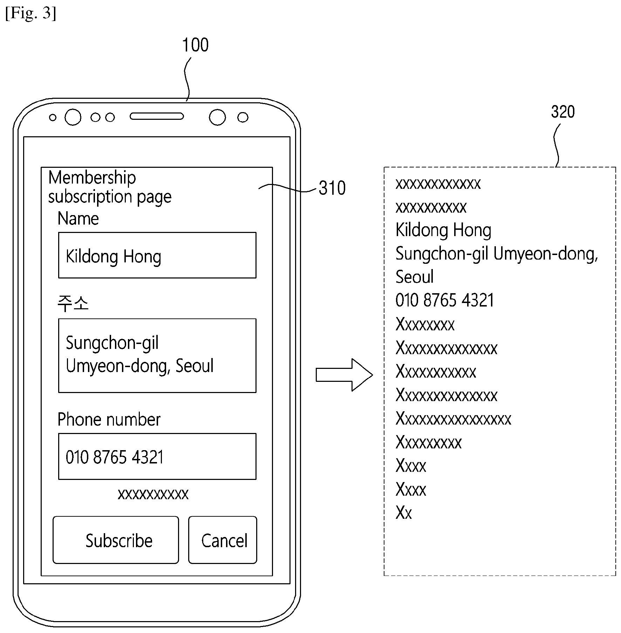

FIG. 3 illustrates how a computing apparatus extracts a text from a screen according to an exemplary embodiment.

Referring to FIG. 3, the computing apparatus 100 may display a first screen 310 of a first user interface. The first user interface illustrated in FIG. 3 is a web page for receiving personal information required for subscription to a web service. The computing apparatus 100 may obtain an image by capturing the first screen 310. The computing apparatus 100 may extract a text 320 from the first screen 310 by applying OCR to the captured image of the first screen 310.

The computing apparatus 100 may input the extracted text 320 to a text classification model and thus detect that input information input by a user is "Kildong Hong," "Sungchon-gil Umyeon-dong, Seoul" and "010 87654 4321" in the text 320. In addition, the computing apparatus 100 may determine that the information input by the user belongs to categories of name, address and phone number based on the output of the text classification model.

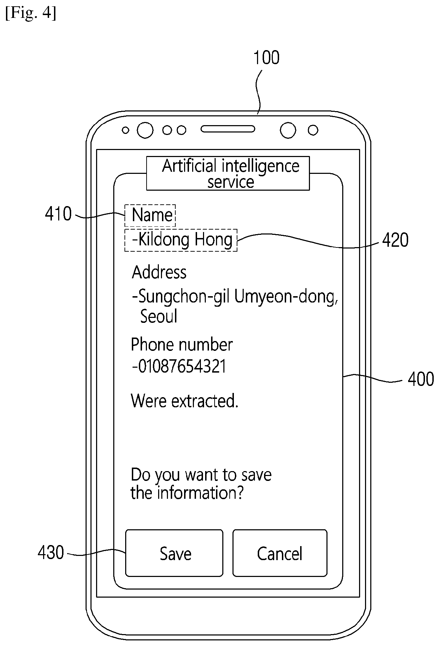

The computing apparatus 100 may display the classified input information. FIG. 4 illustrates how a computing apparatus displays a classified text according to an exemplary embodiment.

Referring to FIG. 4, at the stage of storing input information, the computing apparatus 100 displays classified input information before storing the input information and display a message 400 for receiving confirmation about the storage of the input information from a user. The message 400 includes a category name 410 of the classified input information and input information 420. When the user inputs a storage execution command to the computing apparatus 100 in response to the message 400, the computing apparatus 100 stores a data set in which the input information 420 is stored in a field having the category name 410 as a field name. The method of receiving the storage execution command from the user may vary depending on exemplary embodiments. For example, a save button 430 included in the displayed message 400 may be selected, or a voice input instructing storage execution may be used to input the storage execution command to the computing apparatus 100.

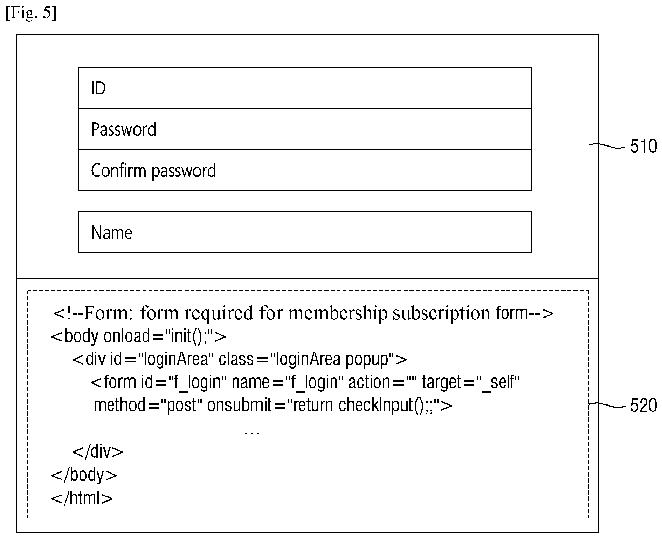

FIG. 5 illustrates how a computing apparatus extracts a text from a screen according to another exemplary embodiment. In particular, FIG. 5 illustrates an example in which the computing apparatus obtains input information using source code 520.

The computing apparatus may obtain the source code 520 that configures a user interface 510. For example, in the case of the user interface 510 constructed in hypertext markup language (HTML), the computing apparatus obtain a source for implementing the web page, as illustrated in FIG. 5.

The computing apparatus may input the obtained source code to a text classification model. Here, the text classification model may be a model generated by performing machine learning on annotations and identifiers included in source code. For example, if a web page developer designates an identifier for generally receiving a name as "name" and inputs a text such as "form required for membership subscription" to a relevant annotation, the text classification model may learn this and identify "name" as the identifier for receiving a name. By inputting source code to the text classification model, the computing apparatus can identify identifiers, to which input information input by a user is allocated, in the source code.

Then, when a user inputs input information to the computing apparatus, the computing apparatus may obtain information allocated to the identifiers as the input information. In addition, the computing apparatus may create and store a data set based on the obtained input information.

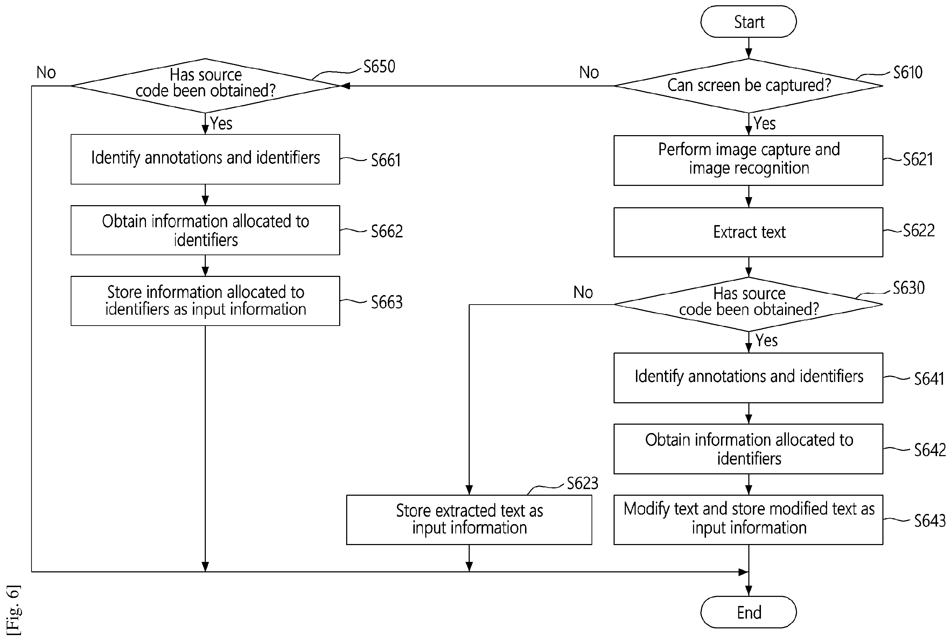

FIG. 6 illustrates a process in which a computing apparatus extracts a text using one or more of screen capture and source code according to another exemplary embodiment.

First, in operation S610, the computing apparatus may determine whether a screen displaying a first user interface can be captured. For example, it may not be possible to capture a web page to which an anti-screen capture function has been applied.

If the screen can be captured, the computing apparatus may capture an image and perform image recognition on the captured image in operation S621. Then, in operation S622, the computing apparatus may extract a text as a result of performing the image recognition. In addition, the computing apparatus may identify input information in the extracted text using a text classification model.

In addition, in operation S630, the computing apparatus may determine whether source code for the first user interface can be obtained. For example, source code cannot be obtained in the case of a user interface configured by a program whose program code cannot be directly identified. If the source code cannot be obtained, the computing apparatus may store a data set based on the input information identified in the text extracted in operation S622. If the source code is obtained in operation S630, the computing apparatus may identify annotations and identifiers in the obtained source code in operation S641. Then, the computing apparatus may obtain information allocated to the identified identifiers in operation S642. If the information is obtained in operation S642, the computing apparatus may modify the text extracted in operation S622 based on the information obtained in operation S642, construct the input information into a data set based on the modified text, and store the data set. That is, the information obtained from the source code can be used as supplementary information for increasing the accuracy of the input information obtained from the captured image.

In addition, if the screen cannot be captured in operation S610, the computing apparatus may determine whether source code can be obtained in operation S650. If the source code is obtained in operation S650, the computing apparatus may identify annotations and identifiers in the obtained source code in operation S661. Then, the computing apparatus may obtain information allocated to the identified identifiers in operation S662. In this case, the computing apparatus may store a data set using the information allocated to the identifiers as the input information in operation S663.

If neither the screen capture nor the acquisition of the source code is possible, the computing apparatus may not perform storage of input information. Depending on exemplary embodiments, the computing apparatus may output a message informing that there is no extracted input information.

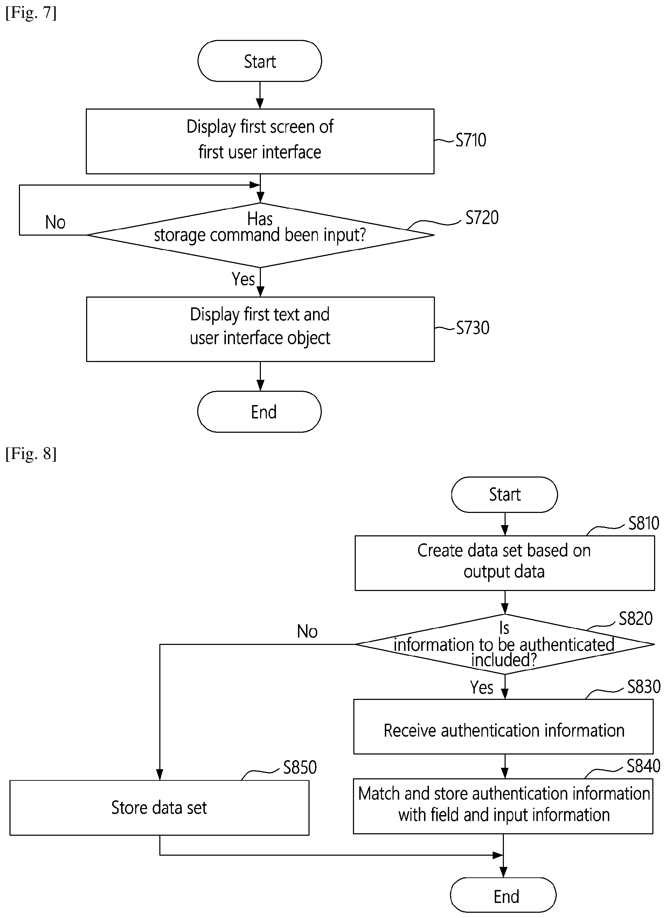

FIG. 7 illustrates a process in which a computing apparatus provides a user interface for classifying and storing input information according to an exemplary embodiment.

First, while displaying a first screen of a first user interface in operation S710, the computing apparatus may receive a storage command in operation S720. Here, the storage command may be input in various ways. For example, the computing apparatus may display a floating icon such that the floating icon overlaps the first screen, and a user may select or click the displayed floating icon to input the storage command. For another example, the computing apparatus may receive a voice input for a particular word, such as "information storage," as the storage command. According to another exemplary embodiment, operation S720 may be replaced by an operation of extracting a first text from the first screen and determining whether the first text includes information to be stored using a text classification model.

When the storage command is input in operation S720, the computing apparatus may display the first text extracted from the first screen in operation S730. According to an exemplary embodiment, in operation S730, the computing apparatus may display not the entire text extracted from the first screen, but a text identified as input information from among the text extracted from the first screen. In addition, according to an exemplary embodiment, the computing apparatus may further display a user interface object for selecting whether to store the displayed first text in operation S730. According to an exemplary embodiment, the user interface object may be a soft button provided to receive a user input. For example, the computing apparatus may display the save button 430 illustrated in FIG. 4.

FIG. 8 illustrates a process of registering authentication information for input information according to an exemplary embodiment.

First, in operation S810, a computing apparatus may create a data set based on output data of a text classification model which is obtained by performing operations S210 through S230 of FIG. 2. Then, the computing apparatus may determine whether information to be authenticated is included in the created data set in operation S820. Here, the information to be authenticated refers to information such as personal information that can be identified and used only by an authenticated user. According to an exemplary embodiment, the computing apparatus may determine whether the information to be authenticated is included in the data set based on whether a field name classified as the information to be authenticated is included in the data set. For example, the computing apparatus may input field names to the text classification model and determine that the information to be authenticated is included in the data set if there exists a field name judged to belong to a 'personal information' category.

When determining that the information to be authenticated is included in the data set, the computing apparatus may receive authentication information in operation S830. Here, the authentication information refers to information used to authenticate a user. For example, the authentication information may include at least one of a fingerprint, iris information, face recognition information, and a password. In operation S830, the computing apparatus may display a user interface for receiving authentication information. Then, the computing apparatus may match the received authentication information with a field and input information and store the authentication information matched with the field and the input information in operation S840. As a result of operation S840, when the computing apparatus intends to automatically input information to a field to be authenticated, it can output or input the input information after receiving authentication information if there is the authentication information matched and stored with the field. If it is determined in operation S820 that the information to be authenticated is not included in the data set, the data set may be stored without the input of authentication information in operation S850.

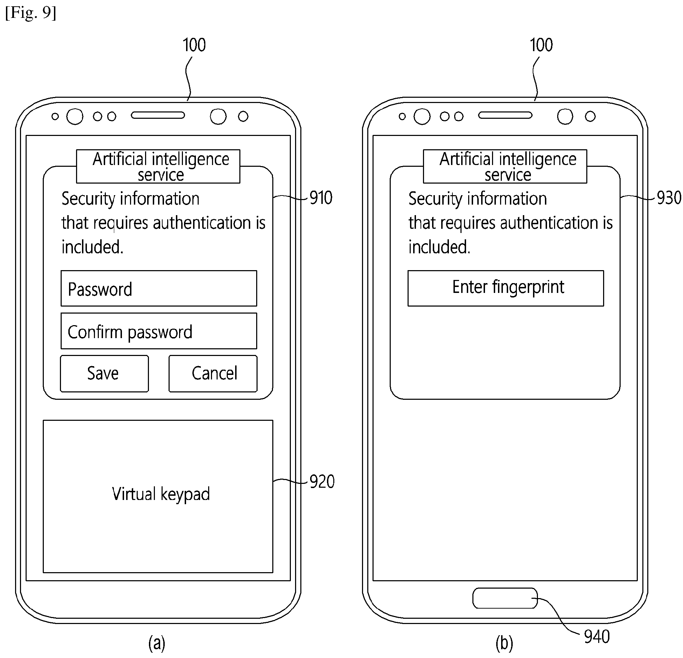

FIG. 9 illustrates a user interface for receiving authentication information according to an exemplary embodiment.

According to an example, a computing apparatus 100 may display a password input user interface 910 for receiving a password as authentication information, as illustrated in FIG. 9A. When storing information to be authenticated, a user may register a password for the information to be authenticated by inputting the password to the password input user interface 910 using a virtual keypad 920.

According to another example, the computing apparatus 100 may display a message 930 requesting fingerprint input as illustrated in FIG. 9B. The user may check the message 930 and input a fingerprint through a fingerprint recognizer 940 provided in the computing apparatus 100, thereby registering fingerprint information for the information to be authenticated.

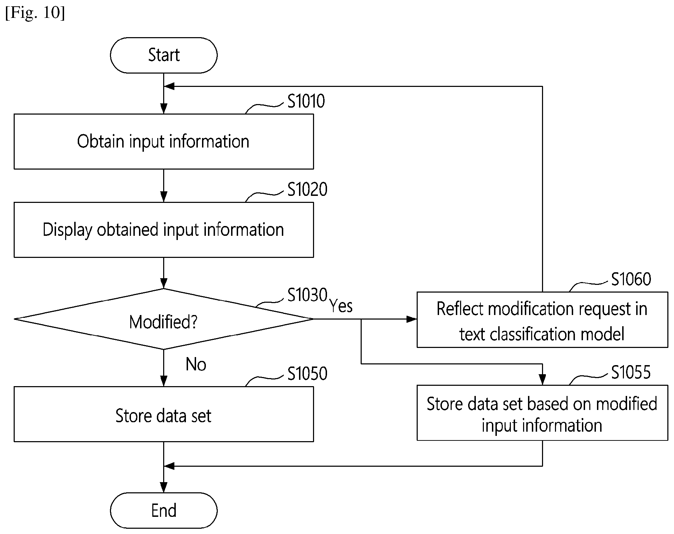

FIG. 10 illustrates a process of storing a data set based on user feedback on obtained input information according to an exemplary embodiment.

First, in operation S1010, a computing apparatus is arranged to obtain input information by performing operations S210 through S230 of FIG. 2. Then, the computing apparatus is arranged to display the obtained input information in operation S1020. Here, the computing apparatus is arranged to display the obtained input information together with the category of the input information determined based on a text classification model. For example, when identifying that the obtained input information is "Kildong Hong" and the category of the input information is "name," the computing apparatus may display "name: Kildong Hong." In addition, in operation S1020, the computing apparatus is arranged to display the input information on a user interface for receiving a request to modify the displayed input information.

If the input information is modified in operation S1030 in response to a user's modification request received through the user interface displaying the input information, the computing apparatus is arranged to store a data set having the input information modified at the modification request as a value of a field in operation S1050. In addition, if the input information is modified, the computing apparatus may reflect the content of the modification request in the text classification model in operation S1060. According to an exemplary embodiment, the content of the modification request may be reflected in the text classification model by changing a weight set to classify a text in the text classification model. That is, the computing apparatus may change the weight of the text classification model to reduce the probability that the same classification result as the classification result before the modification will be produced for a similar text after the modification. This can increase the probability that the computing apparatus will obtain, as input information, the same result as the result of modification by the user in operation S1010. Here, according to an exemplary embodiment, the computing apparatus may transmit the content of the modification request to the text classification model training apparatus 10 in order to reflect the content of the modification request in the text classification model and receive the updated text classification model from the text classification model training apparatus 10. If the input information is not modified in operation S1030, the computing apparatus may store a data set based on the unmodified input information in operation S1050.

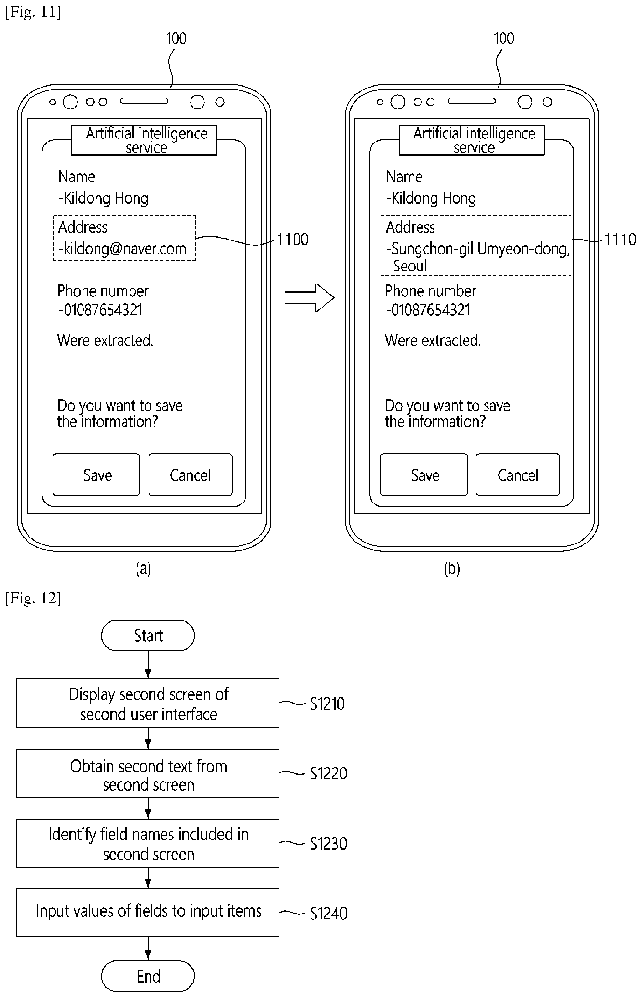

FIG. 11 illustrates a user interface for receiving user feedback on obtained input information according to an exemplary embodiment.

In the example of FIG. 11A, a computing apparatus 100 identifies that kildong@ss.com 1100 input to an input item located near "email address" in the user interface belongs to an "address" category. Here, the computing apparatus 100 identifies the email address "kildong@ss.com" 1100 as belonging to the "address" category due to the word "address" in the "email address." In this case, if a user modifies the "address" item to "Sungchon-gil Umyeon-dong, Seoul" as illustrated in FIG. 11B, the computing apparatus 100 may adjust the weight of a text classification model to reduce the probability that input information input near "address" word is classified into the "address" category if the word "email" exists near "address."

FIG. 12 illustrates a process of automatically inputting information to input items of a user interface according to an exemplary embodiment.

First, a computing apparatus is arranged to display a second screen of a second user interface in operation S1210. Here, the second screen includes input items to which information can be input by a user. That is, the second screen may refer to a screen displaying input items to which information has not yet been input by the user. In addition, the second screen is a screen configured by the second user interface different from the first user interface mentioned in FIG. 2. For example, the first user interface may be a membership subscription page of a web service, and the second user interface may be an identity verification information input page of an identity verification service.

Next, the computing apparatus is arranged to obtain a second text from the second screen in operation S1220. Here, the second text refers to a text used to identify the input items. Depending on exemplary embodiments, the second text may be replaced by another form (e.g., an image) of information that can be used to identify the input items. For example, the computing apparatus may obtain the name of an input item, which is displayed near the input item included in the second screen, as the second text. The method of obtaining the second text may vary depending on exemplary embodiments. According to an exemplary embodiment, the computing apparatus may capture an image of the second screen and then extract the second text through image recognition on the captured image.

Next, in operation S1230, the computing apparatus is arranged to identify field names included in the second screen based on the obtained second text. Here, the field names refer to field names included in a data set stored as a result of performing the process of FIG. 2. That is, the computing apparatus may identify whether the field names included in the data set are displayed on the second screen. For example, if the field names included in the data set are name, telephone number and address and the second text includes name or signature, subscription screen and confirmation, the computing apparatus may determine that the name or signature included in the second screen is similar to the field name "name" and thus identify that the field name "name" is displayed on the second screen.

Next, in operation S1240, the computing apparatus is arranged to automatically input values of fields, which correspond to the identified field names, into input items, near or inside of which the identified field names are displayed. For example, if the text "name" is displayed near a left side of a text box displayed on the screen and a value of a field corresponding to "name" in the data set is "Kildong Hong," the computing apparatus may automatically enter "Kildong Hong" in the text box.

According to an exemplary embodiment, the computing apparatus may monitor the second user interface by periodically repeating operations S1220 and S1230. By monitoring the second user interface, the computing apparatus may determine whether an input item to which information needs to be input is included in the second user interface. While monitoring the second user interface, if the computing apparatus identifies a field name in the second screen displaying the second user interface, but not a value corresponding to the field name, it may determine that the second user interface has an input item to which information needs to be input and thus perform an automatic input command (that is, perform operation S1240). That is, by monitoring the screen using a model generated through machine learning, the computing apparatus may determine whether to automatically input information to the displayed screen. In other words, the computing apparatus can perceive the context in which to input information by utilizing artificial intelligence.

According to another exemplary embodiment, operations S1220 through S1240 may be performed when an automatic input command is input to the computing apparatus. That is, the computing apparatus may automatically input information using the stored data set in response to the user's input.

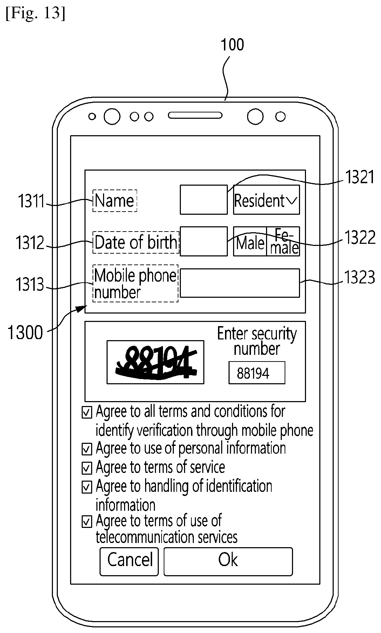

FIG. 13 is a diagram for explaining the concept of how a computing apparatus recognizes input items of a user interface according to an exemplary embodiment. In the example of FIG. 13, the computing apparatus 100 displays a screen of a user interface 1300 including input items 1321, 1322 and 1323 for receiving a name, a date of birth, and a mobile phone number from a user.

If the computing apparatus 100 has stored a data set having field names "name," "date of birth" and "mobile phone number" by performing the process of FIG. 2, it may identify field names (1311, 1312 and 1313) corresponding to name 1311, date of birth 1312, and mobile phone number in the screen 1300. Based on the identified field names, the computing apparatus may input a value of a field whose field name (1311) is "name" in the data set to the input item 1321, input a value of a field whose field name (1312) is "date of birth" in the data set to the input item 1322, and input a value of a field whose field name (1313) is "mobile phone number" in the data set to the input item 1323.

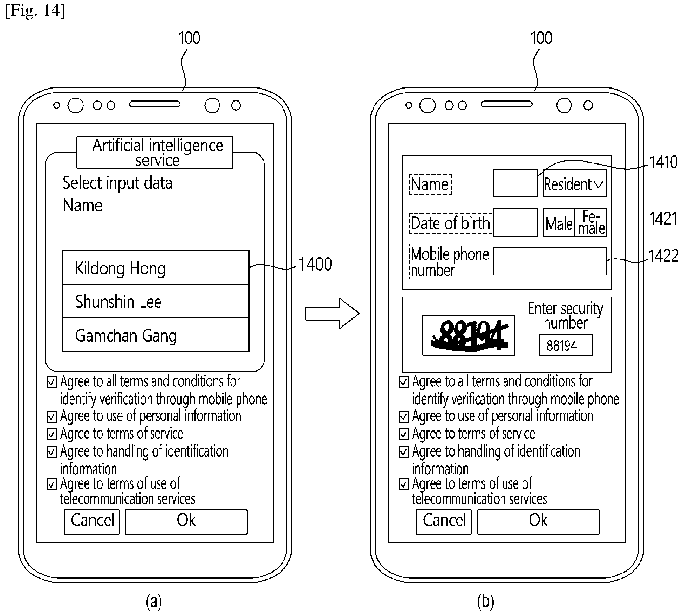

FIG. 14 illustrates a case where a computing apparatus inputs information by selecting a representative field name according to an exemplary embodiment. In particular, FIG. 14 illustrates a case where a data set stored by the computing apparatus includes a plurality of sets. In addition, a plurality of input items may exist in a user interface to which information is to be input.

According to an exemplary embodiment, if a data set includes a first field and a second field, the computing apparatus 100 may prioritize the fields of the data set in operation S240 of FIG. 2. Then, the computing apparatus 100 may display a value stored in a field having a higher priority among the first field and the second field. Here, the prioritization may be performed to select a value representing the data set. For example, in a data set composed of fields "resident registration number," "name," "date of birth" and "mobile phone number," "resident registration number" may have a first priority, "name" may have a second priority, "date of birth" may have a fourth priority, and "mobile phone number" may have a third priority. In addition, field names displayed on the screen may be "name," "date of birth" and "mobile phone number" as illustrated in FIG. 13. In this case, the computing apparatus may determine "name" having the highest priority as a representative field. Alternatively, the prioritization may be performed to designate a representative field name and subfield names depending on exemplary embodiments. In this case, a field whose field name has been designated as the representative field name can be considered as having the highest priority regardless of a field name displayed on the screen. When field's priorities are designated and field names in the displayed screen are identified, the computing apparatus 100 may display values stored in a high-priority field within data sets. That is, the computing apparatus 100 according to an exemplary embodiment may display a value, which is stored in a field having a higher priority among the first field and the second field, as a representative value of candidate values to be stored in an input item. Referring to FIG. 14, the computing apparatus 100 may display a list of values 1400 stored in a name field among values stored in a plurality of data sets.

In addition, if the second user interface includes a first input item corresponding to the first field and a second input item corresponding to the second field, when a first value of the first field is selected, a second value stored in the second field of a data set storing the selected first value may be input to the second input item. Referring again to FIG. 14, when "Kildong Hong" is selected from the list of values, the computing apparatus 100 may input the value "Kildong Hong" of the name field to an input item 1410 corresponding to the name field. In addition, the computing apparatus 100 may input a value of "18082017," which is stored in a date of birth field of a data set storing "Kildong Hong," to an input item 1421 corresponding to the date of birth field. The computing apparatus may also input a value stored in a mobile phone number field of the data set storing "Kildong Hong" to an input item 1422.

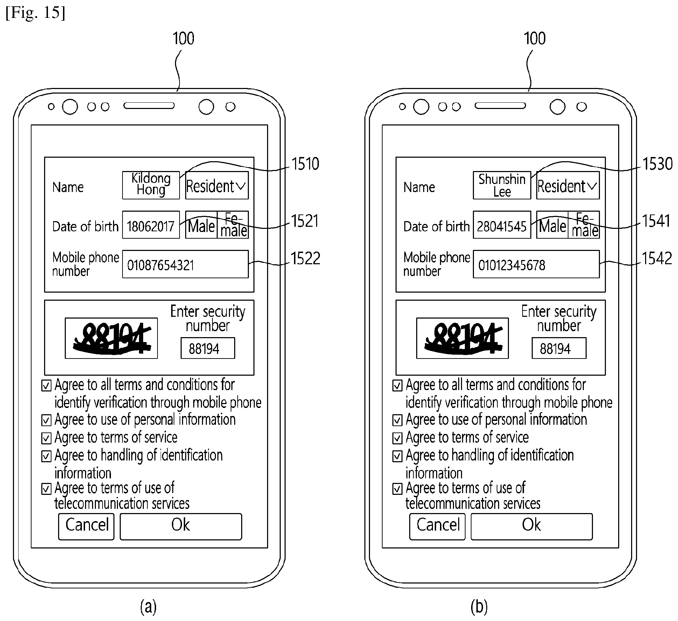

FIG. 15 illustrates a case where information input to one of input items is changed according to an exemplary embodiment.

According to an exemplary embodiment, when information input to one of a plurality of input items is changed to information stored in another data set, information input to the other input items may also be changed to information corresponding to the changed information of the input item, that is, may be changed to information stored in the another data set. Referring to FIG. 15, "Kildong Hong" has been input to a name input item 1510 displayed on a computing apparatus 100, "18082017" has been input to a date of birth input item 1521, and "01087654321" has been input to a mobile phone number input item 1522. Here, if the input information "Kildong Hong" is changed to "Sunshin Lee" as in an input item 1530, the computing apparatus 100 may change the information input to the input items 1521 and 1522 to "28041545" and "01012345678," which are stored in a data set storing "Sunshin Lee," as in a date of birth input item 1541 and a mobile phone number input item 1542.

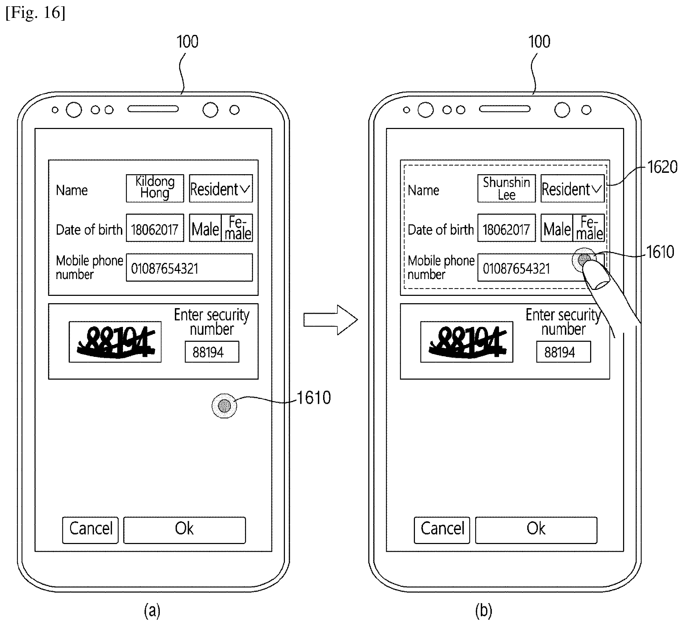

FIG. 16 illustrates a case where information is input using a floating icon according to an exemplary embodiment.

According to an exemplary embodiment, as illustrated in FIG. 16A, a computing apparatus 100 may display a floating icon 1610 such that the floating icon 1610 overlaps a screen displaying a user interface. The floating icon 1610 displayed to overlap the screen can be dragged to a different position by a user.

In addition, according to an exemplary embodiment, when storing input information, the computing apparatus 100 may determine the range of a first screen from which to extract a text by using the floating icon 1610. Alternatively, when storing the input information, the computing apparatus 100 may determine the range of a second screen in which to identify field names, by using the floating icon 1610.

Referring to FIG. 16B, in a state where the floating icon 1610 is displayed, the computing apparatus 100 may receive a user's input for selecting the floating icon 1610. For example, the user may briefly touch a position where the floating icon 1610 is displayed on the computing apparatus 1610. In this case, the computing apparatus may set an area of interest 1620 around the position where the floating icon 1610 is displayed and may determine the screen displayed within the area of interest 1620 to be the first screen or the second screen. The method of setting the area of interest 1620 based on a designated position within the screen can be implemented using a conventional method. The computing apparatus 100 may obtain input information from a text displayed within the area of interest or may automatically input information to input items displayed within the area of interest. According to an exemplary embodiment, the computing apparatus 100 may determine the screen displayed within the area of interest 1620 to be the first screen or the second screen using a text classification model generated as a result of learning texts. For example, if a text classified as a field name such as 'name' and a text classified as a value such as 'Sunshin Lee' are included in the area of interest 1620, the computing apparatus 100 may determine the screen displayed within the area of interest 1620 to be the first screen. When determining the screen displayed within the area of interest 1620 to be the first screen, the computing apparatus may perform operations S210 through S240 of FIG. 2. **In** this case, an input for setting the area of interest 1620 is a storage command. **In** addition, if a text classified as a field name such as 'name' exists in the area of interest 1620 but a text classified as a value does not exist in the area of interest 1602, the computing apparatus 100 may determine the screen displayed within the area of interest 1620 to be the second screen. When determining the screen displayed within the area of interest 1620 to be the second screen, the computing apparatus may perform operations S1210 through S1240 of FIG. 12. **In** this case, the input for setting the area of interest 1620 is an automatic input command.

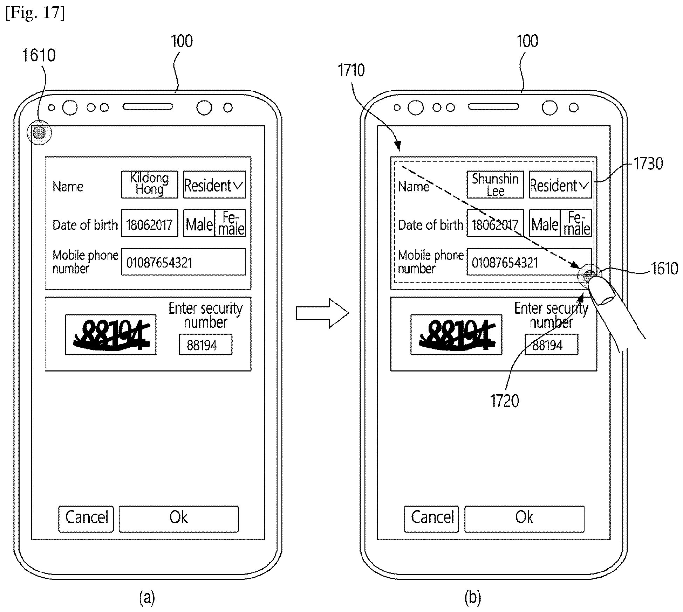

**In** addition, according to another exemplary embodiment, the computing apparatus 100 may determine the range of the first screen or the second screen using a drag input. FIG. 17 illustrates a case where information is input using a floating icon according to another exemplary embodiment.

According to the current exemplary embodiment, in a state where a floating icon 1610 is displayed as illustrated in FIG. 17A, an input for selecting the floating icon may be received. Here, the input may be an input of touching the floating icon 1610 for a long time or two times consecutively and then panning the touch position while keeping touching the floating icon 1610. Referring to FIG. 17B, when receiving an input for moving the floating icon 1610 from a first position 1710 to a second position 1720 while keeping touching the floating icon 1610, the computing apparatus 100 may determine an area of interest 1730, which can be determined based on the first position 1710 and the second position 1720, to be the first screen or the second screen.

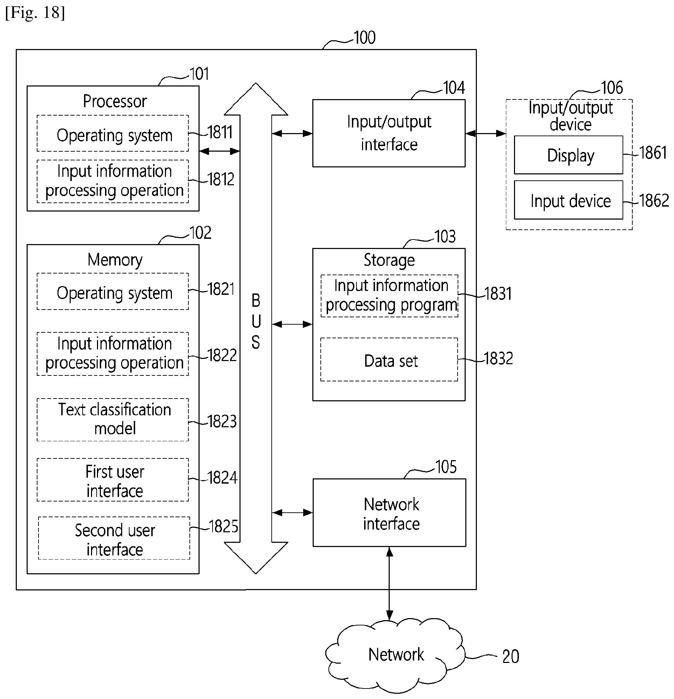

The configuration and operation of a computing apparatus according to another exemplary embodiment will now be described with reference to FIGS. 18 through 22.

In an exemplary embodiment, a computing apparatus in which an input information processing operation is executed on a processor is provided. An example of the configuration of the computing apparatus according to the current exemplary embodiment is illustrated in FIG. 18.

As used herein, the term "operation" refers to a series of instructions bundled together based on a function and executed on a processor.

First, the configuration and operation of the computing apparatus according to the current exemplary embodiment will be described with reference to FIG. 18. Referring to FIG. 18, the computing apparatus 100 according to the current exemplary embodiment includes a processor 101, a memory 102, and a storage 103. The computing apparatus 100 may further include an input/output interface 104 which receives user input for execution of an application and provides output such as video/audio and a network interface 105 which is connected to a network 20. In addition, according to some other exemplary embodiments, the computing apparatus 100 may further include an input/output device 106 which inputs input information to the computing apparatus 100 through the input/output interface 104 or display a screen. A system bus BUS serves as a data transmission/reception path between the processor 101, the memory 102, the input/output interface 104, and the storage 103. The memory 102 may be a volatile data storage device such as a random access memory (RAM). The storage 103 may be a nonvolatile memory such as a flash memory or a data storage device such as a hard disk. Alternatively, the storage 103 may be a storage device (such as cloud storage) that is physically separated from the computing apparatus 100.

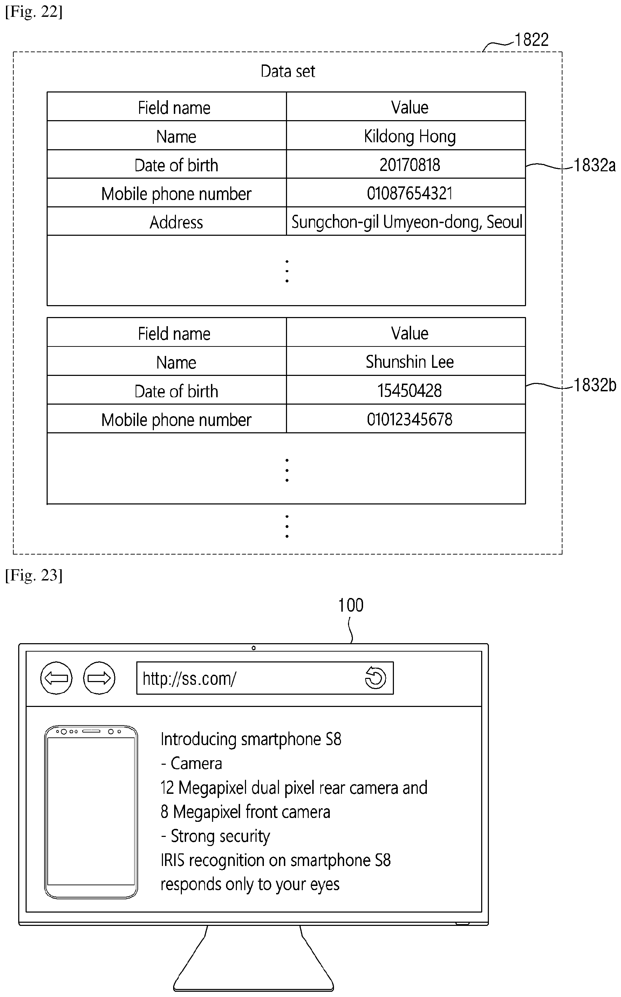

The storage 103 may store an input information processing program 1831 and a data set 1832. The input information processing program 1831 may include executable codes composed of a plurality of operations for executing an input information processing operation. The executable codes may be loaded and stored in the memory 102 (1822). The data set 1832 may be a combination of data which has input information input by a user as a value of each field and in which a field name of each field is stored in a designated configuration as illustrated in FIG. 22. According to an exemplary embodiment, a combination of input information associated with each other may be stored as one data set. For example, referring to FIG. 22, input information for a user named 'Kildong Hong' may be stored as a first data set 1832a, and input information for another user named 'Sunshin Lee' may be stored as a second data set 1832b. According to another exemplary embodiment, the data set 1832 may be stored in the form of a database.

The memory 102 loads and stores an executable code (or a binary code) stored in the storage 103. The execution code is composed of a plurality of operations. The processor 101 fetches an operation stored in the memory 102 and executes the fetched operation (1812). The processor 101 may receive an operation stored in the memory through the system bus BUS.

Data related to an operating system installed in the computing apparatus 100 is loaded and stored in the memory 102 when the computing apparatus 100 is booted. **In** FIG. 18, an operating system related operation 1821 loaded into the memory 102 is illustrated. The operating system related operation 1821 is executed on the processor 101 (1811). The memory 102 may store text classification model related data 1823 received from a text classification model training apparatus. In addition, the memory 102 may load and store source code 1824 for implementing a first user interface which has received information from a user and source code 1825 for implementing a second user interface which includes input items to receive information from the user. The first user interface 1824 and the second user interface 1825 may be executed by the processor 101 to respectively output a first screen and a second screen to a display 1861 via the input/output interface 104.

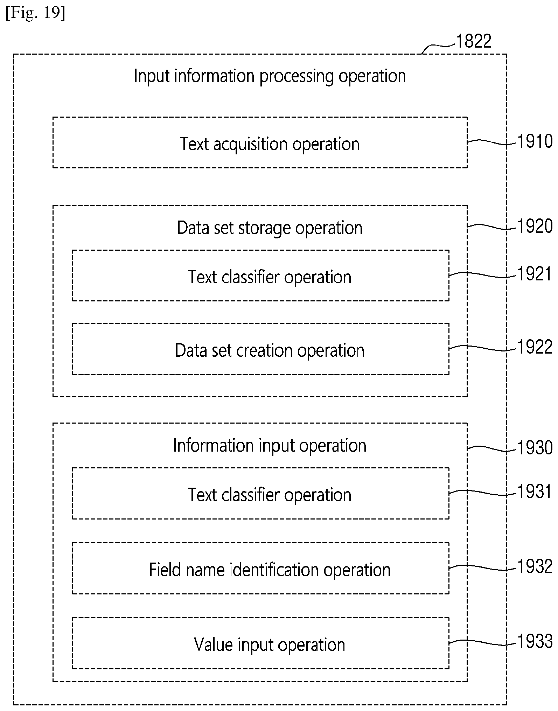

According to an exemplary embodiment, the processor 101 of the computing apparatus 100 executes an operation of extracting a text from a user interface to execute an input information processing operation 1822. Therefore, as illustrated in FIG. 19, the input information processing operation 1822 may include a text acquisition operation 1910. Here, detailed features of the text acquisition operation 1910 may vary depending on exemplary embodiments. For example, the text acquisition operation 1910 may be an operation of recognizing a text in a captured image of a screen or an operation of obtaining source code that configures a user interface, as described above.

When storing the text extracted from the user interface, the computing apparatus may execute a data set storage operation 1920 included in the input information processing operation 1822 illustrated in FIG. 19. The computing apparatus 100 may input a text extracted from the first screen to the text classification model 1823. The computing apparatus 100 may obtain data about whether input information exists in the text and about categories of the input information as output data of the text classification model 1823. At this time, a text classifier operation 1921 included in the data set storage operation 1920 may be executed.

In addition, the computing apparatus 100 may create the data set 1832, which is composed of fields having the input information as values, based on the output data of the text classification model 1823 and store the data set 1832 in the storage 103. At this time, a data set creation operation 1922 included in the data set storage operation 1920 may be executed.

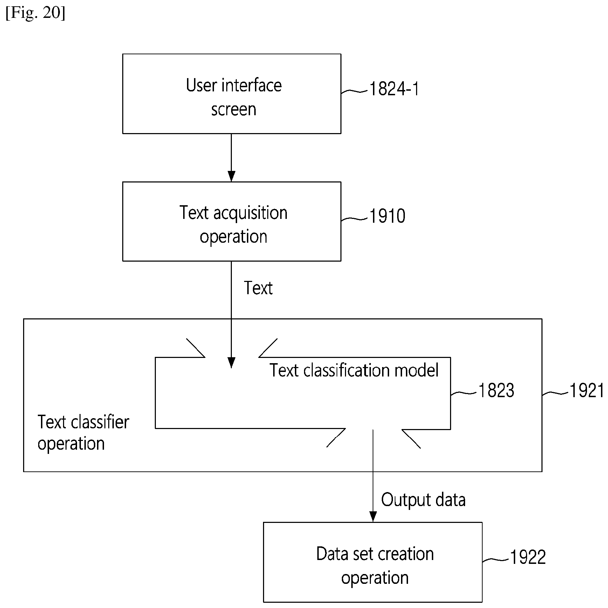

Referring to FIG. 20, the computing apparatus 100 may extract a text by executing the text acquisition operation 1910 on a user interface screen 1824-1, input the extracted text to the text classification model 1823 and obtain output data by executing the text classifier operation 1921, and create a data set by executing the data set creation operation 1922 on the output data.

In addition, according to an exemplary embodiment, the processor 101 of the computing apparatus 100 may execute an information input operation 1930 included in the input information processing operation 1822 of FIG. 19 in order to perform a process of automatically inputting input information stored in a data set to input items of a user interface. The computing apparatus 100 may input a text obtained by executing the text acquisition operation 1910 to the text classification model. A text classifier operation 1931 that can be executed at this time is illustrated in FIG. 19. The computing apparatus 100 may identify field names of a data set corresponding to the extracted text in output data of the text classification model. A field name identification operation 1932 that can be executed at this time is illustrated in FIG. 19. Once the field names are identified, the computing apparatus 100 may input values stored in fields having the identified field names to input items. A value input operation 1933 that can be executed at this time is illustrated in FIG. 19.

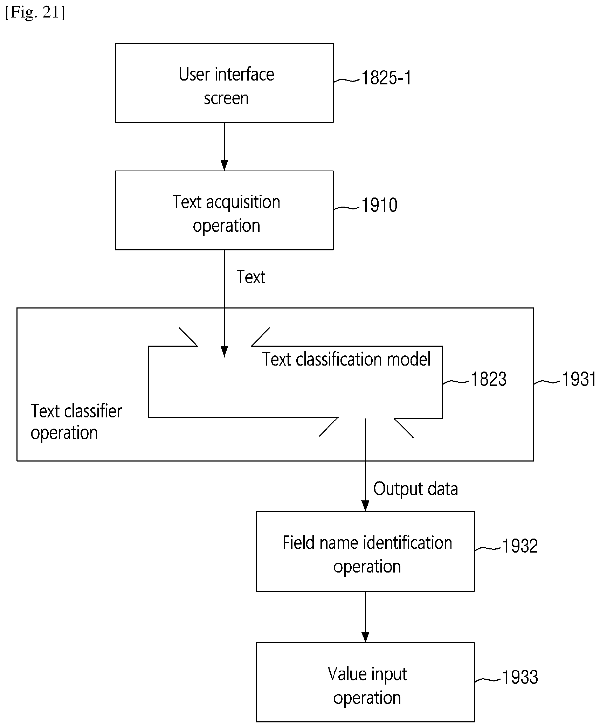

That is, referring to FIG. 21, the computing apparatus 100 may extract a text by executing the text acquisition operation 1910 on a user interface screen 1825-1, input the extracted text to the text classification model 1823 and obtain output data by executing the text classifier operation 1931, and identify field names by executing the fieldname identification operation 1932 on the output data. In addition, the computing apparatus 100 may input values stored in fields, which correspond to the identified field names, to input items by executing the value input operation 1933.

According to another exemplary embodiment, the input information processing operation 1822 may include an operation of, when storing a text extracted from the first user interface in a data set as input information, registering authentication information in the user input information if the input information includes information to be stored in a field that is to be authenticated. In addition, the input information processing operation 1822 may include an operation of, when inputting input information to the second user interface, receiving authentication information and comparing the received authentication information with registered authentication information before displaying the input information to be input to the second user interface or inputting the input information to the second user interface if the registered authentication information for the input information exists. In the current exemplary embodiment, the computing apparatus 100 may receive authentication information through an input device 1862 included in the input/output device 106. Here, the input device 1862 may be configured differently according to the type of the authentication information. For example, if the authentication information is fingerprint information, the input device 1862 may include a fingerprint reader. If the authentication information is a password, the input device 1862 may include a touch screen for entering a password through a touch input on a virtual keypad.

According to another exemplary embodiment, when receiving a storage command or an automatic input command through the input device 1862, the computing apparatus 100 may store input information or input information to input items of a user interface. As described above, the form of the storage command or the automatic input command may vary depending on exemplary embodiments. For example, the computing apparatus 100 may receive the storage command or the automatic input command by receiving a touch input on a floating icon through a touch screen or by receiving a voice input through a microphone.

According to another exemplary embodiment, a first computing apparatus which obtains input information from the first user interface and stores a data set and a second computing apparatus which inputs the input information stored in the data set to the second user interface may be provided as separate apparatuses. In this case, the data set may be stored in cloud storage accessible by the first computing apparatus and the second computing apparatus.

FIGS. 23 through 26 illustrate a case where a computing apparatus 100 having a display inputs information according to another exemplary embodiment. According to the exemplary embodiment, input information extracted from a first screen and then stored may not be information input by a user.

Referring to FIG. 23, the computing apparatus 100 may display input information on the display by running a web browser or an application. Here, the input information may include text, an image, etc. included in a page displayed on the display. When a storage command is input or when the computing apparatus 100 determines that information expected to be stored is included in a screen as a result of monitoring the screen displayed on the display, the computing apparatus 100 is arranged to extract input information (e.g., first text) from the first screen using a text classification model by performing the process of FIG. 2. That is, using a model learned through machine learning, the computing apparatus 100 is arranged to determine whether the first screen or a first user interface includes information that needs to be stored. In addition, the computing apparatus 100 is arranged to store a data set created using the extracted input information.

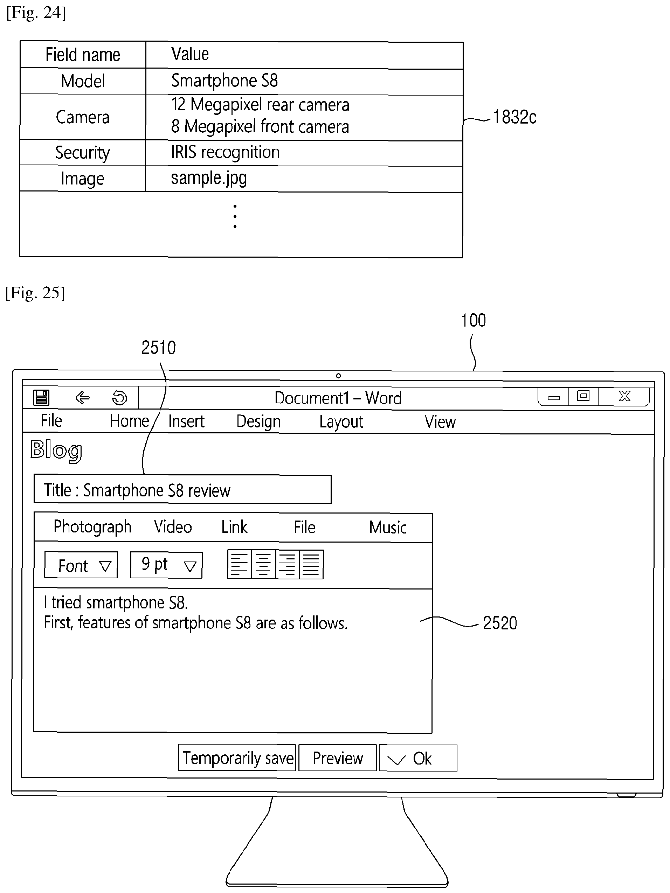

Referring to FIG. 24, the computing apparatus 100 may store a data set 1832c having fields of "model," "camera," "security" and "image" based on the screen displayed on the computing apparatus 100 of FIG. 23.

In addition, referring to FIG. 25, the computing apparatus 100 may display a second screen of a second user interface for creating a document. Here, the second user interface may be, for example, a user interface included in a word processor, a spreadsheet, or presentation document creation software that can create a document and store the created document as a file. For another example, the second user interface may be a post creation page displayed on a web browser to create a post to be uploaded to a web page.

When receiving an automatic input command while displaying the second screen, the computing apparatus 100 may input the information included in the data set to input items. Alternatively, the computing apparatus 100 may determine whether information input is necessary for the second screen by monitoring the displayed screen. When determining that information input is necessary, the computing apparatus 100 may input the information included in the data set to the input items. That is, the computing apparatus 100 may determine whether the second screen is a screen requiring information input by inputting information extracted from the second screen to a model generated through machine learning. Here, the model generated through the machine learning may be a model for determining whether a text or an image extracted from the second screen is information included in the screen requiring information input. Referring to the example of FIG. 25, the computing apparatus 100 may determine that texts such as file, home, insert, word, document and layout extracted from the screen are words highly likely to be included in a user interface for document creation. Therefore, the computing apparatus 100 may determine that the screen displayed on the computing apparatus 100 is the screen requiring information input. **In** addition, if an image obtained by capturing the screen includes an image indicating a word processor, the computing apparatus 100 may determine that the screen is the screen requiring information input.

In addition, when determining that the displayed screen requires information input, the computing apparatus 100 may determine whether information to be input to input items exist in a data set. For example, when an extracted text includes 'smartphone S8,' the computing apparatus 100 may determine that information included in the data set 1832c illustrated in FIG. 24 is highly likely to be information to be input to an information input area 2520. In particular, when determining that the information included in the data set 1832c is displayed in a title input area 2510, the computing apparatus 100 may give a weight to the information which input in the title input area 210. Therefore, the computing apparatus 100 may determine that the information included in the data set 1832c is more likely to be input to the information input area 2520 than when displayed in other areas.

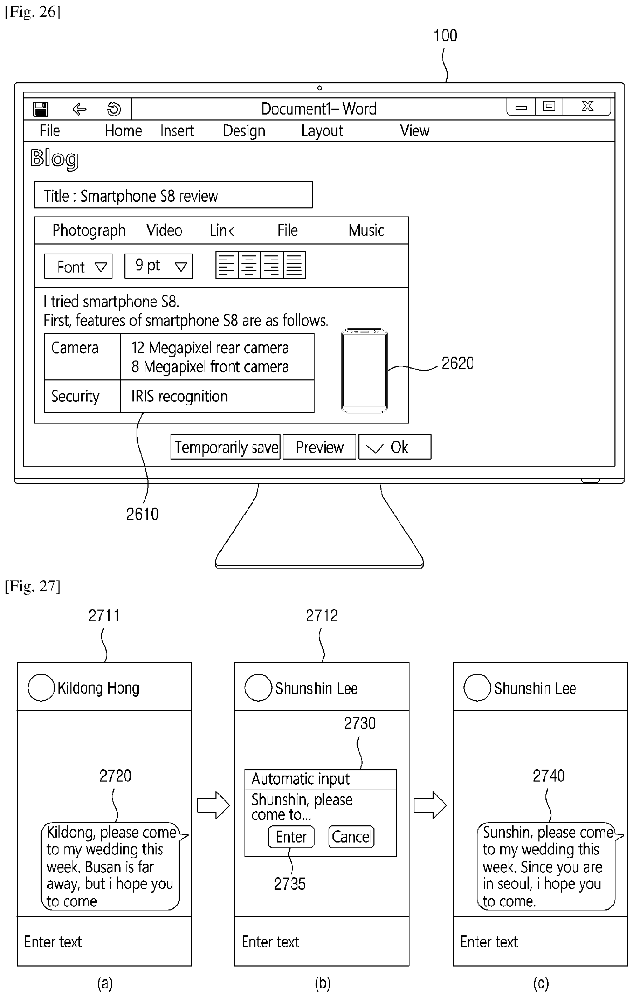

FIG. 26 illustrates the result of inputting the information included in the data set 1832c of FIG. 24. When information corresponding to field names or values included in the data set 1832c is identified in information included in the second screen, the computing apparatus 100 may input the identified information in the form of a table 610 or an image 2620 based on the data set 1832c.

FIG. 27 illustrates a case where information is input according to another exemplary embodiment. Referring to FIG. 27A, a computing apparatus may create a message to be sent to a contact and display a first screen 2711 showing a message 2720 exchanged with the contact. Here, the computing apparatus may store a first text included in the message 2720. At this time, the computing apparatus may select a keyword included in the first text, match the keyword with a field name by using a text classification model, and store the keyword in a field of a data set. For example, the computing apparatus may store a keyword 'Busan,' which is included in the first text, in a field whose field name is 'address.'

Referring to FIG. 27B, the computing apparatus may display a second screen 2712 for creating a message to be sent to another contact. Here, the computing apparatus may generate a second text using the stored first text. According to the current exemplary embodiment, the computing apparatus may generate the second text using information about the another contact. The computing apparatus may collect information about contacts. For example, the computing apparatus may obtain user information (e.g., address, etc.) of a contact from a server through a messenger application. The computing apparatus may compare the obtained user information with a keyword included in the first text by inputting the obtained user information and the keyword to a model generated through machine learning. For example, if the obtained user information has a value of 'Seoul' for an 'address' item and the keyword included in the first text is 'Busan' stored in the 'address' field of the data set, the computing apparatus may change 'Busan' included in the first text to 'Seoul' to generate the second text. In addition, the computing apparatus may generate the second text in the context of the changed keyword by using a natural language processing model.

Referring to FIG. 27B, the computing apparatus may display a message 2730 for selecting whether to input the generated second text. When an enter button 2735 included in the message 2730 is selected, the computing apparatus may input a message 2740 including the second text to a text input area of the second screen 2712, as illustrated in FIG. 27C.

The methods according to the exemplary embodiments described above can be performed by the execution of a computer program implemented as computer-readable code. The computer program may be transmitted from a first computing apparatus to a second computing apparatus through a network such as the Internet and may be installed in the second computing apparatus and used in the second computing apparatus. Examples of the first computing apparatus and the second computing apparatus include fixed computing apparatuses such as a server, a physical server belonging to a server pool for a cloud service, and a desktop PC.

The computer program may be stored in a recording medium such as a DVD-ROM or a flash memory.

While the present disclosure has been particularly shown and described with reference to exemplary exemplary embodiments thereof, it will be understood by those of ordinary skill in the art that various changes in form and detail may be made therein without departing from the scope of the present disclosure as defined by the following claims. The exemplary embodiments should be considered in a descriptive sense only and not for purposes of limitation.

## Claims

1. An electronic device (100) comprising:
a memory (102);
a display (1861);
an input device (1862); and
one processor (101) configured to:
display (210) a screen of a first application on the display;
obtain (220) input information from the screen of the first application, wherein the input information is input, via the input device, on the screen of the first application by a user;
obtain (230) output data by inputting the obtained input information which is in the form of a text to a text classification model generated using a machine learning model, wherein the output data is used as a basis for at least one data set, the at least one data set including at least one field name and the input information as a value corresponding to the at least one field name;
display (1020) the obtained input information on a user interface configured to receive a request to modify the displayed input information;
in response to a user modification request, modify (1030) the input information;
store (1055) the at least one data set having at least one field name and the modified input information as a value corresponding to the at least one field name;
display (1210) a screen of a second application on the display;
obtain (1220) a text of the screen of the second application;
determine (1230), based on the text of the second application, if the at least one field name included in the at least one data set is included in the screen of the second application; and
if the at least one field name included in the at least one data set is included in the screen of the second application, input (1240) the stored modified input information included in the at least one data set into an input item of the screen, of the second application.

2. The electronic device of claim 1, wherein the second application is an application for creating a spreadsheet document.

3. The electronic device of claim 1, wherein the input information is obtained, for output, from the screen of the first application using a combination of an optical character recognition, OCR, and the machine learning model.

4. A method of controlling an electronic device, the method comprising:
displaying (210) a screen of a first application on a display of the electronic device;
obtaining (220) input information from the screen of the first application, wherein the input information is input, via an input device of the electronic device, on the screen of the first application by a user;
obtaining (230) output data by inputting the obtained input information which is in the form of a text to a text classification model generated using a machine learning model, wherein the output data is used as a basis for at least one data set, the at least one data set including at least one field name and the input information as a value corresponding to the at least one field name;
displaying (1020) the obtained input information on a user interface configured to receive a request to modify the displayed input information;
in response to a user modification request, modifying (1030) the input information;
storing (1055) the at least one data set having at least one field name and the modified input information as a value corresponding to the at least one field name;
displaying (1210) a screen of a second application on the display;
obtaining (1220) a text of the screen of the second application;
determining (1230), based on the text of the second application, if the at least one field name included in the at least one data set is included in the screen of the second application; and
if the at least one field name included in the at least one data set is included in the screen of the second application, inputting the stored modified input information included in the at least one data set into an input item of the screen, of the second application.

5. The method of claim 4, wherein the second application is an application for creating a spreadsheet document.

6. The method of claim 4, wherein the input information is obtained, for output, from the screen of the first application using a combination of an optical character recognition, OCR, and the machine learning model.

7. A non-transitory computer-readable recording medium having recorded thereon instructions executable by one processor to perform operations comprising:
displaying (210) a screen of a first application on a display;
obtaining (220) input information from the screen of the first application, wherein the input information is input, via an input device, on the screen of the first application by a user;
obtaining (230) output data by inputting the obtained input information which is in the form of a text to a text classification model generated using a machine learning model, wherein the output data is used as a basis for at least one data set, the at least one data set including at least one field name and the input information as a value corresponding to the at least one field name;
displaying (1020) the obtained input information on a user interface configured to receive a request to modify the displayed input information;
in response to a user modification request, modifying (1030) the input information;
storing (1055) the at least one data set having at least one field name and the modified input information as a value corresponding to the at least one field name;
displaying (1210) a screen of a second application on the display;
obtaining (1220) a text of the screen of the second application;
determining (1230), based on the text of the second application, if the at least one field name included in the at least one data set is included in the screen of the second application; and
if the at least one field name included in the at least one data set is included in the screen of the second application, inputting the stored modified input information included in the at least one data set into an input item of the screen, of the second application.

8. The non-transitory computer-readable recording medium of claim 7, wherein the second application is an application for creating a spreadsheet document.

9. The non-transitory computer-readable recording medium of claim 7, wherein the input information is obtained, for output, from the screen of the first application using a combination of an optical character recognition, OCR, and the machine learning model.

## Patentansprüche

1. Elektronische Einrichtung (100), umfassend:
einen Speicher (102);
eine Anzeige (1861);
eine Eingabeeinrichtung (1862); und
einen Prozessor (101), der zu Folgendem konfiguriert ist:
Anzeigen (210) eines Bildschirms einer ersten Anwendung auf der Anzeige;
Erhalten (220) von Eingabeinformationen von dem Bildschirm der ersten Anwendung, wobei die Eingabeinformationen über die Eingabeeinrichtung auf dem Bildschirm der ersten Anwendung durch einen Benutzer eingegeben werden;
Erhalten (230) von Ausgabedaten durch Eingeben der erhaltenen Eingabeinformationen, die in Form eines Textes vorliegen, in ein Textklassifizierungsmodell, das unter Verwendung eines Maschinenlernmodells erzeugt wird, wobei die Ausgabedaten als Grundlage für mindestens einen Datensatz verwendet werden, wobei der mindestens eine Datensatz mindestens einen Feldnamen und die Eingabeinformationen als einen Wert, der dem mindestens einen Feldnamen entspricht, beinhaltet;
Anzeigen (1020) der erhaltenen Eingabeinformationen auf einer Benutzerschnittstelle, die dazu konfiguriert ist, eine Anforderung zum Modifizieren der angezeigten Eingabeinformationen zu empfangen;
als Reaktion auf eine Benutzermodifizierungsanforderung, Modifizieren (1030) der Eingabeinformationen;
Speichern (1055) des mindestens einen Datensatzes mit mindestens einem Feldnamen und den modifizierten Eingabeinformationen als einen Wert, der dem mindestens einen Feldnamen entspricht;
Anzeigen (1210) eines Bildschirms einer zweiten Anwendung auf der Anzeige;
Erhalten (1220) eines Textes des Bildschirms der zweiten Anwendung;
Bestimmen (1230), basierend auf dem Text der zweiten Anwendung, ob der mindestens eine Feldname, der in dem mindestens einen Datensatz beinhaltet ist, in dem Bildschirm der zweiten Anwendung beinhaltet ist; und
wenn der mindestens eine Feldname, der in dem mindestens einen Datensatz beinhaltet ist, in dem Bildschirm der zweiten Anwendung beinhaltet ist, Eingeben (1240) der gespeicherten modifizierten Eingabeinformationen, die in dem mindestens einen Datensatz beinhaltet sind, in ein Eingabeelement des Bildschirms der zweiten Anwendung.

2. Elektronische Einrichtung nach Anspruch 1, wobei die zweite Anwendung eine Anwendung zum Erstellen eines Tabellenkalkulationsdokuments ist.

3. Elektronische Einrichtung nach Anspruch 1, wobei die Eingabeinformationen von dem Bildschirm der ersten Anwendung unter Verwendung einer Kombination aus einer optischen Zeichenerkennung, OCR, und dem Maschinenlernmodell zum Ausgeben erhalten werden.

4. Verfahren zum Steuern einer elektronischen Einrichtung, wobei das Verfahren Folgendes umfasst:
Anzeigen (210) eines Bildschirms einer ersten Anwendung auf einer Anzeige der elektronischen Einrichtung;
Erhalten (220) von Eingabeinformationen von dem Bildschirm der ersten Anwendung, wobei die Eingabeinformationen über eine Eingabeeinrichtung der elektronischen Einrichtung auf dem Bildschirm der ersten Anwendung durch einen Benutzer eingegeben werden;
Erhalten (230) von Ausgabedaten durch Eingeben der erhaltenen Eingabeinformationen, die in Form eines Textes vorliegen, in ein Textklassifizierungsmodell, das unter Verwendung eines Maschinenlernmodells erzeugt wird, wobei die Ausgabedaten als Grundlage für mindestens einen Datensatz verwendet werden, wobei der mindestens eine Datensatz mindestens einen Feldnamen und die Eingabeinformationen als einen Wert, der dem mindestens einen Feldnamen entspricht, beinhaltet;
Anzeigen (1020) der erhaltenen Eingabeinformationen auf einer Benutzerschnittstelle, die dazu konfiguriert ist, eine Anforderung zum Modifizieren der angezeigten Eingabeinformationen zu empfangen;
als Reaktion auf eine Benutzermodifizierungsanforderung, Modifizieren (1030) der Eingabeinformationen;
Speichern (1055) des mindestens einen Datensatzes mit mindestens einem Feldnamen und den modifizierten Eingabeinformationen als einen Wert, der dem mindestens einen Feldnamen entspricht;
Anzeigen (1210) eines Bildschirms einer zweiten Anwendung auf der Anzeige;
Erhalten (1220) eines Textes des Bildschirms der zweiten Anwendung;
Bestimmen (1230), basierend auf dem Text der zweiten Anwendung, ob der mindestens eine Feldname, der in dem mindestens einen Datensatz beinhaltet ist, in dem Bildschirm der zweiten Anwendung beinhaltet ist; und
wenn der mindestens eine Feldname, der in dem mindestens einen Datensatz beinhaltet ist, in dem Bildschirm der zweiten Anwendung beinhaltet ist, Eingeben der gespeicherten modifizierten Eingabeinformationen, die in dem mindestens einen Datensatz beinhaltet sind, in ein Eingabeelement des Bildschirms der zweiten Anwendung.

5. Verfahren nach Anspruch 4, wobei die zweite Anwendung eine Anwendung zum Erstellen eines Tabellenkalkulationsdokuments ist.

6. Verfahren nach Anspruch 4, wobei die Eingabeinformationen von dem Bildschirm der ersten Anwendung unter Verwendung einer Kombination aus einer optischen Zeichenerkennung, OCR, und dem Maschinenlernmodell zum Ausgeben erhalten werden.

7. Nichtflüchtiges computerlesbares Aufzeichnungsmedium, das darauf aufgezeichnete Anweisungen aufweist, die von einem Prozessor ausführbar sind, um Vorgänge durchzuführen, die Folgendes umfassen:
Anzeigen (210) eines Bildschirms einer ersten Anwendung auf einer Anzeige;
Erhalten (220) von Eingabeinformationen von dem Bildschirm der ersten Anwendung, wobei die Eingabeinformationen über eine Eingabeeinrichtung auf dem Bildschirm der ersten Anwendung durch einen Benutzer eingegeben werden;
Erhalten (230) von Ausgabedaten durch Eingeben der erhaltenen Eingabeinformationen, die in Form eines Textes vorliegen, in ein Textklassifizierungsmodell, das unter Verwendung eines Maschinenlernmodells erzeugt wird, wobei die Ausgabedaten als Grundlage für mindestens einen Datensatz verwendet werden, wobei der mindestens eine Datensatz mindestens einen Feldnamen und die Eingabeinformationen als einen Wert, der dem mindestens einen Feldnamen entspricht, beinhaltet;
Anzeigen (1020) der erhaltenen Eingabeinformationen auf einer Benutzerschnittstelle, die dazu konfiguriert ist, eine Anforderung zum Modifizieren der angezeigten Eingabeinformationen zu empfangen;
als Reaktion auf eine Benutzermodifizierungsanforderung, Modifizieren (1030) der Eingabeinformationen;
Speichern (1055) des mindestens einen Datensatzes mit mindestens einem Feldnamen und den modifizierten Eingabeinformationen als einen Wert, der dem mindestens einen Feldnamen entspricht;
Anzeigen (1210) eines Bildschirms einer zweiten Anwendung auf der Anzeige;
Erhalten (1220) eines Textes des Bildschirms der zweiten Anwendung;
Bestimmen (1230), basierend auf dem Text der zweiten Anwendung, ob der mindestens eine Feldname, der in dem mindestens einen Datensatz beinhaltet ist, in dem Bildschirm der zweiten Anwendung beinhaltet ist; und
wenn der mindestens eine Feldname, der in dem mindestens einen Datensatz beinhaltet ist, in dem Bildschirm der zweiten Anwendung beinhaltet ist, Eingeben der gespeicherten modifizierten Eingabeinformationen, die in dem mindestens einen Datensatz beinhaltet sind, in ein Eingabeelement des Bildschirms der zweiten Anwendung.

8. Nichtflüchtiges computerlesbares Aufzeichnungsmedium nach Anspruch 7, wobei die zweite Anwendung eine Anwendung zum Erstellen eines Tabellenkalkulationsdokuments ist.

9. Nichtflüchtiges computerlesbares Aufzeichnungsmedium nach Anspruch 7, wobei die Eingabeinformationen von dem Bildschirm der ersten Anwendung unter Verwendung einer Kombination aus einer optischen Zeichenerkennung, OCR, und dem Maschinenlernmodell zum Ausgeben erhalten werden.

## Revendications

1. Dispositif électronique (100) comprenant :
une mémoire (102) ;
un affichage (1861) ;
un dispositif d'entrée (1862); et
un processeur (101) configuré pour :
afficher (210) un écran d'une première application sur l'affichage ;
obtenir (220) des informations d'entrée à partir de l'écran de la première application, dans lequel les informations d'entrée sont entrées, via le dispositif d'entrée, sur l'écran de la première application par un utilisateur ;
obtenir (230) des données de sortie en entrant les informations d'entrée obtenues qui sont sous la forme d'un texte dans un modèle de classification de texte généré à l'aide d'un modèle d'apprentissage automatique, dans lequel les données de sortie sont utilisées comme base pour au moins un ensemble de données, l'au moins un ensemble de données comprenant au moins un nom de champ et les informations d'entrée en tant que valeur correspondant à l'au moins un nom de champ ;
afficher (1020) les informations d'entrée obtenues sur une interface utilisateur configurée pour recevoir une demande de modification des informations d'entrée affichées ;
en réponse à une demande de modification d'utilisateur, modifier (1030) les informations d'entrée ;
stocker (1055) l'au moins un ensemble de données ayant au moins un nom de champ et les informations d'entrée modifiées en tant que valeur correspondant à l'au moins un nom de champ ;
afficher (1210) un écran d'une seconde application sur l'affichage ;
obtenir (1220) un texte de l'écran de la seconde application ;
déterminer (1230), sur la base du texte de la seconde application, si l'au moins un nom de champ compris dans l'au moins un ensemble de données est compris sur l'écran de la seconde application ; et
si l'au moins un nom de champ compris dans l'au moins un ensemble de données est compris sur l'écran de la seconde application, entrer (1240) les informations d'entrée modifiées stockées comprises dans l'au moins un ensemble de données dans un élément d'entrée de l'écran, de la seconde application.

2. Dispositif électronique selon la revendication 1, dans lequel la seconde application est une application de création de document de feuille de calcul.

3. Dispositif électronique selon la revendication 1, dans lequel les informations d'entrée sont obtenues, pour sortie, à partir de l'écran de la première application en utilisant une combinaison d'une reconnaissance optique de caractères, OCR, et du modèle d'apprentissage automatique.

4. Procédé de commande d'un dispositif électronique, le procédé comprenant :
l'affichage (210) d'un écran d'une première application sur un affichage du dispositif électronique ;
l'obtention (220) d'informations d'entrée à partir de l'écran de la première application, dans lequel les informations d'entrée sont entrées, via un dispositif d'entrée du dispositif électronique, sur l'écran de la première application par un utilisateur ;
l'obtention (230) de données de sortie en entrant les informations d'entrée obtenues qui sont sous la forme d'un texte dans un modèle de classification de texte généré à l'aide d'un modèle d'apprentissage automatique, dans lequel les données de sortie sont utilisées comme base pour au moins un ensemble de données, l'au moins un ensemble de données comprenant au moins un nom de champ et les informations d'entrée en tant que valeur correspondant à l'au moins un nom de champ ;
l'affichage (1020) des informations d'entrée obtenues sur une interface utilisateur configurée pour recevoir une demande de modification des informations d'entrée affichées ;
en réponse à une demande de modification d'utilisateur, la modification (1030) des informations d'entrée ;
le stockage (1055) de l'au moins un ensemble de données ayant au moins un nom de champ et les informations d'entrée modifiées en tant que valeur correspondant à l'au moins un nom de champ ;
l'affichage (1210) d'un écran d'une seconde application sur l'affichage ;
l'obtention (1220) d'un texte de l'écran de la seconde application ;
la détermination (1230), sur la base du texte de la seconde application, si l'au moins un nom de champ compris dans l'au moins un ensemble de données est compris sur l'écran de la seconde application ; et
si l'au moins un nom de champ compris dans l'au moins un ensemble de données est compris sur l'écran de la seconde application, l'entrée des informations d'entrée modifiées stockées comprises dans l'au moins un ensemble de données dans un élément d'entrée de l'écran, de la seconde application.

5. Procédé selon la revendication 4, dans lequel la seconde application est une application de création de document de feuille de calcul.

6. Procédé selon la revendication 4, dans lequel les informations d'entrée sont obtenues, pour sortie, à partir de l'écran de la première application en utilisant une combinaison d'une reconnaissance optique de caractères, OCR, et du modèle d'apprentissage automatique.

7. Support d'enregistrement non transitoire lisible par ordinateur sur lequel sont enregistrées des instructions exécutables par un processeur pour réaliser des opérations comprenant :
l'affichage (210) d'un écran d'une première application sur un affichage ;
l'obtention (220) d'informations d'entrée à partir de l'écran de la première application, dans lequel les informations d'entrée sont entrées, via un dispositif d'entrée, sur l'écran de la première application par un utilisateur ;
l'obtention (230) de données de sortie en entrant les informations d'entrée obtenues qui sont sous la forme d'un texte dans un modèle de classification de texte généré à l'aide d'un modèle d'apprentissage automatique, dans lequel les données de sortie sont utilisées comme base pour au moins un ensemble de données, l'au moins un ensemble de données comprenant au moins un nom de champ et les informations d'entrée en tant que valeur correspondant à l'au moins un nom de champ ;
l'affichage (1020) des informations d'entrée obtenues sur une interface utilisateur configurée pour recevoir une demande de modification des informations d'entrée affichées ;
en réponse à une demande de modification d'utilisateur, la modification (1030) des informations d'entrée ;
le stockage (1055) de l'au moins un ensemble de données ayant au moins un nom de champ et les informations d'entrée modifiées en tant que valeur correspondant à l'au moins un nom de champ ;
l'affichage (1210) d'un écran d'une seconde application sur l'affichage ;
l'obtention (1220) d'un texte de l'écran de la seconde application ;
la détermination (1230), sur la base du texte de la seconde application, si l'au moins un nom de champ compris dans l'au moins un ensemble de données est compris sur l'écran de la seconde application ; et
si l'au moins un nom de champ compris dans l'au moins un ensemble de données est compris sur l'écran de la seconde application, l'entrée des informations d'entrée modifiées stockées comprises dans l'au moins un ensemble de données dans un élément d'entrée de l'écran, de la seconde application.

8. Support d'enregistrement lisible par ordinateur non transitoire selon la revendication 7, dans lequel la seconde application est une application de création de document de feuille de calcul.

9. Support d'enregistrement lisible par ordinateur non transitoire selon la revendication 7, dans lequel les informations d'entrée sont obtenues, pour sortie, à partir de l'écran de la première application en utilisant une combinaison d'une reconnaissance optique de caractères, OCR, et du modèle d'apprentissage automatique.
